# EUROPEAN PATENT SPECIFICATION

(11) **EP 2 051 798 B1**
(45) Date of publication and mention of the grant of the patent: **11.01.2012**
(21) Application number: 07786205.0
(22) Date of filing: 19.07.2007
(51) Int. Cl.: B01D 53/90, B01D 53/94, C01C 1/02, F01N 3/20, H01M 8/06, H01M 8/22, H01M 8/04

(54) **METHOD AND DEVICE FOR STORING AND DELIVERING AMMONIA FROM A SOLID AMMONIA STORAGE MEDIUM**
VERFAHREN UND VORRICHTUNG ZUR SPEICHERUNG UND LIEFERUNG VON AMMONIAK AUS EINEM FESTEN AMMONIAKSPEICHERMEDIUM
PROCÉDÉ ET DISPOSITIF POUR STOCKER ET DISTRIBUER DE L'AMMONIAC À PARTIR D'UN MILIEU DE STOCKAGE D'AMMONIAC SOLIDE

(30) Priority: 20.07.2006 DK 200600999
(43) Date of publication of application: 29.04.2009
(73) Proprietor: AMMINEX A/S, 2860 Søborg (DK)
(72) Inventor: JOHANNESSEN, Tue, 2600 Glostrup (DK); SCHMIDT, Henning, 2800 Lyngby (DK); NORSKOV, Jens, Kehlet, 2840 Holte (DK); CHRISTENSEN, Claus, Hviid, 3540 Lynge (DK)
(74) Representative: Samson & Partner
(86) International application number: PCT/EP2007/006447
(87) International publication number: WO 2008/009455

(56) References cited:
- EP-A- 1 092 466
- EP-A1- 1 338 562
- WO-A-95/02655
- WO-A-99/01205
- WO-A-02/092512
- WO-A-2005/108289
- US-A- 2 431 470
- US-A- 3 826 810
- US-A1- 2003 219 371

## Description

This invention relates to the release of ammonia from an ammonia-containing material, particularly metal ammine complexes by adding water and for systems utilizing the solid storage material for controlled delivery of ammonia by releasing ammonia in a controlled manner using controlled dosing of water in order to replace ammonia in the crystal lattice with water.

Upon release, ammonia may be used as the reducing agent in selective catalytic reduction (SCR) of NOₓ in exhaust gases from combustion processes.

Other applications using the released ammonia are mobile or portable fuel cell units that can be operated directly on ammonia or on hydrogen made available by catalytic decomposition of ammonia into hydrogen and nitrogen. The present invention may also be applied as ammonia storage/delivery concept in special chemical synthesis routes or other applications where storage of liquid ammonia is too hazardous.

### 2. Description of the Related Art

Ammonia has a potential rope both as indirect hydrogen carrier for fuel cell applications and also as reductant in the selective catalytic reduction of NOx from e.g. internal combustion engines (lean-burn gasoline or diesel engines). However, the use and handling of ammonia as liquid ammonia stored in high-pressure vessels is not acceptable for normal end-user applications. Therefore, new methods safe and dense storage of ammonia has great industrial relevance in several fields of use.

Current environmental regulations necessitate the use of catalysts in the treatment of exhaust gas from automotive vehicles, boilers and furnaces for control of NOₓ emissions. Particularly, vehicles equipped with diesel or other lean burn (gasoline) engines offer the benefit of improved fuel economy, but catalytic reduction of NOₓ using conventional car exhaust catalysts (three-way catalyst) is not feasible because of the high oxygen content in the exhaust gas. Instead, selective catalytic reduction (SCR) has proven useful for achieving the required low levels of NOₓ in the exhaust gas both in stationary and mobile units. In such systems NOₓ is continuously removed from the exhaust gas by injection of a reductant into the exhaust gas prior to entering an SCR catalyst capable of achieving a high conversion of NOₓ.

So far, the most efficient reductant has been ammonia, which is usually introduced into the exhaust gas by controlled injection either of gaseous ammonia (delivered from liquid ammonia stored under pressure), aqueous ammonia or indirectly as urea dissolved in water. In all cases, the amount of reductant being dosed has to be very precisely controlled. Injection of too high amount of reductant will cause a slip of ammonia in the exhaust gas whereas injection of a too small amount of reductant causes a less than optimal conversion of NOₓ.

In many mobile units, the only available technology is to use an aqueous solution of urea as the reductant since in this way potential hazards or safety issues relating to the transport of liquid ammonia are eliminated. However, there are several disadvantages related to the use of aqueous urea as the reductant. First of all, the use of urea solutions requires that a relatively large storage volume is available in order to enable transport sufficient amounts of ammonia. In typical systems, about 30 wt urea solution is used only to transport water. During operation the urea solution is sprayed into the exhaust gas, the droplets evaporate and the urea decomposes more or less selectively to ammonia (one molecule of urea forms two molecules of NH₃ and one CO₂) which by mass is roughly 50wt% of ammonia in the urea molecule. Similar concentrations of ammonia can be achieved using aqueous solutions of ammonia as reductant. Furthermore, for technologies using aqueous solutions a specially designed spray nozzle combined with a precision liquid pump is required to ensure that a) the aqueous urea is delivered to the exhaust system at a desired (and dynamically changing) flow rate and b) that the solution is efficiently dispersed as fine droplets in the gas phase before entering the catalyst. Furthermore, the aqueous solutions might freeze in extreme weather conditions, or the urea solution may simply form precipitates, which might block the dosing system, e.g. the nozzle. Therefore, all lines have to be heated. Furthermore, the decomposition of urea may not proceed as desired. There may be undesired side-reactions giving byproducts in the form of solid deposits of polymers (melamine) and these side reactions also make it difficult to dose a very specific amount of ammonia since the amount of free ammonia released from a given amount of urea can vary according to the decomposition conditions.

WO 2005/108289 A discloses the generation of ammonia by decomposing solid guanidine based material with water. WO 95/02655 A describes the decomposition of urea or like compound in an aqueous solution to yield ammonia. US 3 826 810 A discloses the decomposition of solid guanidine or urea, usually supported, by contact with water in the exhaust gas, thus delivering ammonia. WO 02/092512 describes the controlled feeding of solid urea and water into a reactor to generate ammonia for deNOx purposes. US 2003/219371 A1 discloses the controlled feeding of solid urea and water into a reactor to generate a ammonia for deNOx or fuel cells. EP 1 338 562 A1 describes the controlled feeding of solid urea into a reactor followed by water addition to generate ammonia for deNOx purposes. EP 1 092 466 A describes the controlled heating of solid urea followed by contact with water entrained in the exhaust gas to generate ammonia for deNOx purposes. US 2 431 470 A discloses the decomposition of cyanuric acid or another sublimable compound by contact with humidity in a gas for generating ammonia.

Altogether, these difficulties may limit the possibilities of using SCR technology in pollution abatement, particularly in connection with mobile units. To circumvent these difficulties, the present invention devises an alternative method for transporting and dosing ammonia to exhaust gases prior to entering SCR catalyst systems.

As disclosed in applicant's copending application WO 2006/012903 metal ammine salts can be used as a solid storage media for ammonia which in turn may be used as the reductant in selective catalytic reduction to reduce NOₓ emissions from automotive vehicles, boilers and furnaces. Thus, the metal-ammine salt constitutes a solid storage medium for ammonia, which represent a safe and practical option for storage and transportation of ammonia. Usually, ammonia is released thermally from the preferred metal ammine salt by external heating, see e.g. European Patent No. EP 0 932 440 B1 corresponding to WO 99/01205 A. The metal ammine salt is held in a container from which the released ammonia is dosed through a controllable valve directly into the exhaust gas in the desired proportion. Between the container and the valve, there may be a small buffer volume to increase the controllability of the system.

Useful metal ammine salts have the general formula M(NH₃)ₙX_{z}, where M^{z+} is one or more metal ions capable of binding ammonia (For example M may be Li, Mg, Ca, Sr, V, Cr, Mn, Fe, Co, Ni, Cu, Zn, etc.), n is the coordination number (2-12), and X is one or more anions, where representative examples of X are F, Cl, Br, I, SO₄, MoO₄, PO₄ etc.

During release of ammonia, the original metal-ammine salt M(NH₃)ₙX_{z} is gradually transformed into M(NH₃)ₘX_{z} with m<n. When all the desired ammonia has been released, the resulting M(NH₃)ₘX_{z} can usually be converted back into M(NH₃)ₙX_{z} by an absorption treatment with an ammonia-containing gas stream.

Typical ammonia contents of the metal ammine complexes are in the range of 20-60 wt%, preferably above 30 wt%. As an example, a typical and inexpensive compound such as Mg(NH₃)₆Cl₂ contains 51.7 wt% ammonia. Another example is Ca(NH₃)₈Cl₂, which contains 55 wt% NH₃. Using a compaction method such as the one disclosed in applicant's copending application WO 2006/081824 it is possible to obtain an ammonia density per unit volume above 90% of that of liquid ammonia. This is a unique combination of high density and safety in ammonia handling.

Using applicant's technology enables storage of ammonia at significantly higher densities (both on a volume and a weight basis) than both aqueous ammonia and aqueous urea solutions. For several metal ammine salts it is possible to release all ammonia and then transform the resulting material back into the original metal ammine salt in a large number of cycles. This obviously constitutes preferred embodiments. Additionally, the ammonia is directly delivered into the exhaust in the form of a gas, which is an advantage in itself - both for the simplicity of the flow control system and for an efficient mixing of reducing agent, ammonia, with the exhaust gas - but it also eliminates potential difficulties related to blocking of the dosing system because of precipitation or impurities in a liquid-based system.

For mobile units, it is particularly useful to hold the metal ammine in a container that can be easily separated from mobile unit and replaced by a new metal ammine container. In preferred embodiments, the metal ammine containers are recycled and recharged with ammonia in a separate recharging unit or recharging facility.

Usually, ammonia is released from absorbed state by heating the material by electrical resistance in heating elements or by using the heat from e.g. an exhaust gas. In such a process, ammonia is made available and delivered to the desired location by generating a gauge pressure of ammonia by desorption in the storage container order to control the flow of ammonia through a valve and further on into e.g. an exhaust gas line. When ammonia is thermally desorbed from the solid to generate an elevated ammonia supply pressure, the operating temperature of the desorption process is increased significantly due to the thermodynamic relation between vapour pressure and temperature and the system is less safe due to the availability of desorbed ammonia at a pressure above the standard pressure of the surroundings.

In the present invention, the method of storage and delivery of ammonia is made even more safe and versatile by using water to release the ammonia, which is bound in the solid storage medium. Ammonia is coordinated inside the crystal lattice of a metal ammine salt (the electron lone-pair of ammonia molecules is "facing" the metal cation) but water can replace the position of ammonia in a similar manner due to the same nature of coordination chemistry of electron lone-pairs. Since water is binding slightly stronger to the crystal lattice of the solid, one can extract ammonia without providing any thermal energy of desorption. Therefore, the present invention provides a method for non-thermal release of ammonia from a solid ammonia-storage material using inexpensive and readily available water. In many possible applications, water is readily available. Examples of combinations of ammonia storage/delivery in integrated systems are:
- Systems for NOx removal in automotive units using ammonia in a selective catalytic reduction reaction where ammonia is made available by controlled injection of water into the storage container. Water is present already in the humid exhaust gas or may be taken from a separate fluid container.
- Fuel cell system utilizing ammonia as an energy carrier. Fuel cell systems can convert hydrogen into electricity and the waste product is water. Water may be delivered back to the storage container in order to give "free" release of ammonia. Before being fed to the fuel cell, ammonia may be catalytically decomposed into hydrogen and nitrogen where hydrogen is oxidized in the fuel cell.
- Processes or system where ammonia is used in e.g. a chemical reaction. Ammonia can be made available from a safe and dense solid storage medium using controlled dosing of water stored in a separate tank or by using water as a waste product from the process or system.

After release of ammonia governed by the dosing of water, ammonia is dosed into the desired location/process/fluid/gas by controlling a flow of ammonia from the container - through an optional buffer volume - using an adjustable valve.

### SUMMARY OF THE INVENTION

The present invention relates to a method of releasing ammonia, from an ammonia-containing solid material capable of storing and releasing ammonia by absorption/desorption which is a metal ammonia complex as defined in claim 1.

In a second aspect the invention relates to a device for use in such a method wherein the ammonia is used for a selective catalytic reduction of NOx in an oxygen-containing exhaust gas of a combustion engine or combustion process as defined in claim 13.

### Brief Description of the Drawings

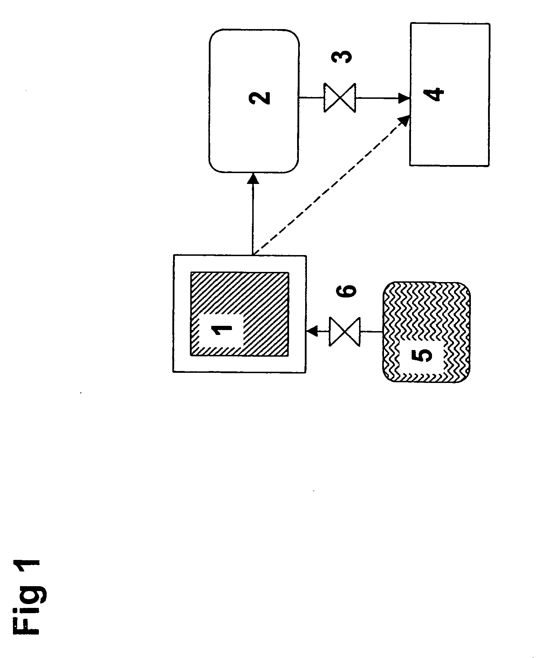

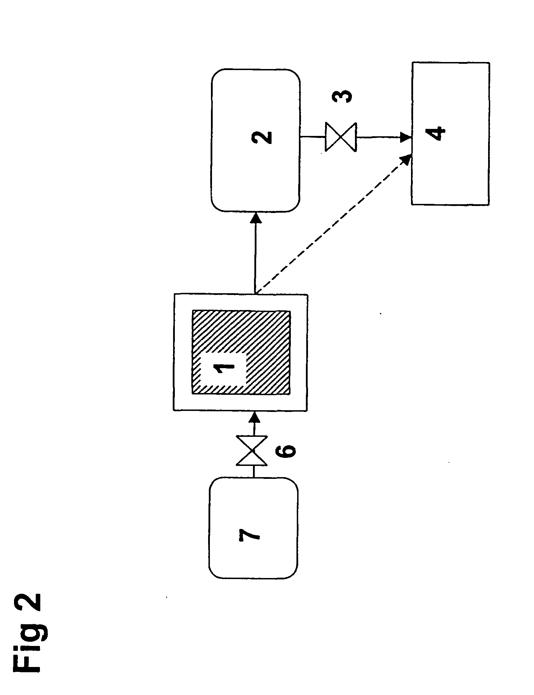

The invention is disclosed more in detail with reference to the drawings in which figures 1 and 2 both show different embodiments of devices of the invention.

### Detailed Description of the Present Invention

Ammonia can be stored safely and efficiently as a solid material - more specifically as metal ammine complexes of the general formula Mₐ(NH₃)ₙX_{z}, wherein M is one or more cations selected from alkaline earth metals, and/or one or more transition metal ions, such as Mn, Fe, Co, Ni, Cu, and/or Zn, X is one or more anions, a is the number of cations per salt molecule, z is the number of anions per salt molecule, and n is the coordination number of 2 to 12.

Such complexes may bind water molecules more strongly to the material than the already absorbed ammonia molecules. Consequently, ammonia may be released - and thereby released - by forcing ammonia out of storage material by a controlled dosing of water. The source or water or whether water is dosed as a liquid or gas is not crucial. In both cases, the absorption of water into the crystal structure will result in release of ammonia. Water may be dosed via a spray or atomization or similar kinds of processes generating droplets. Also, it may be provided by passing a water-saturated (partly saturated, if desired) carrier gas through the storage container. Using humid air may also be a way of providing water. Using a water-containing exhaust gas from combustion processes or fuel cells is also considered embodiments of the invention.

Using the present invention, a heating of the storage material in order to release ammonia at a gauge desorption pressure is circumvented.

The storage material may be regenerated by exposing the water-containing complex to high partial pressure of ammonia or even by direct exposure to liquid ammonia.

Examples of suitable storage materials are chloride or sulphate salts of alkaline earth metals, and/or one or more transition metal ions, such as Mn, Fe, Co, Ni or Cu. Specific examples of well-suited materials are chloride or sulphate salts of Mg, Ca, Sr, i.e. MgCl₂, CaCl₂, SrCl₂, MgSO₄, CaSO₄, SrSO₄.

In applicant's co-pending applications WO 2006/012903 and WO 2006/081824 is disclosed methods and devices for ammonia storage and delivery using compacted metal ammine salts. According to these applications the use of a solid storage material with a low equilibrium pressure of ammonia (preferably below 0.1 bar at room temperature) gives superior safety of the storage method. Using the method of compaction, the saturated material into e.g. dense rods gives a very high ammonia density compared to e.g. granulated material. The ammonia densities in such compacted structures give an ammonia density above 90% of the volumetric ammonia density of liquid ammonia.

The present invention is useful in any system requiring safe and controlled delivery/dosing of ammonia from a high-density solid storage material containing ammonia. The invention is useful both as a general method but also specifically for devices based on ammonia delivery from a solid ammonia storage medium.

The invention is useful for different kinds of formulated solid forms of ammonia storage materials, e.g solid rods/cylinders/blocks with low porosity and also for granulated storage material with a porosity generated from the loss in packing density due to the space between the individual granules.

The present invention is particular useful in the controlled delivery of ammonia to an exhaust gas containing NOx for the purpose of removing NOx by the well-known selective catalytic reduction (SCR) process.

The present invention is useful for both mobile and stationary SCR-application but is considered particularly useful in the delivery of ammonia for automobiles, trucks and ships fuelled on diesel or using lean-burn gasoline or even ammonia-fuelled engines/fuel cells.

The present invention is also useful for delivery of ammonia to solid oxide fuel cells (SOFC), which can operate on a number of fuels, e.g. hydrogen, methane but also directly on gaseous ammonia. It is also useful for the delivery of ammonia to an integrated ammonia decomposition unit for the production of hydrogen, which subsequently may be used as fuel in a PEM Fuel Cell, an alkaline fuel cell or a molten carbonate fuel cell.

### Description of drawings

The invention is now explained more in detail with reference to the drawings showing preferred embodiments of the invention.
Figures 1 and 2 illustrate the use of the present invention in several applications.
Figure 1. The storage unit containing the (optionally compacted) metal ammine salt (1) is exposed to water from a container (5) through an optional controlling valve or nozzle (6). When ammonia is released, it flows to an optional buffer volume (2) and further to an ammonia consuming unit (4) through an optional control valve (3). The ammonia-consuming unit may be a chemical process requiring ammonia such as an exhaust system which requires ammonia in order to carry out NOx reduction by having a DeNOx catalyst that removed NOx by adding ammonia as the reductant. The ammonia-consuming unit (4) may also be a fuel cell system capable of running directly on ammonia as fuel or with an ammonia reformer that converts ammonia into hydrogen or nitrogen where at least the hydrogen is fed to a fuel cell.
Figure 2. The storage unit containing the (optionally compacted) metal ammine salt (1) is exposed to water by introducing a humid gas through an optional controlling valve or nozzle (6) into the storage container. When ammonia is released, it flows to an optional buffer volume (2) and further to an ammonia consuming unit (4) through an optional control valve (3). The humid gas may be taken from the atmosphere or as indicated in the figure from a container or process (7) where water is present as a vapour in a carrier gas. The generation of water vapour or humid gas may take place in a chemical reaction or a combustion process and consequently the gas from (7) may be an exhaust gas from a combustion engine or the product gas of a fuel cell unit.

The ammonia-consuming unit (4) may be a chemical process requiring ammonia such as an exhaust system which requires ammonia in order to carry out NOx reduction by having a DeNOx catalyst that removed NOx by adding ammonia as the reductant. The ammonia-consuming unit may also be a fuel cell system capable of running directly on ammonia as fuel or with an ammonia reformer that converts ammonia into hydrogen or nitrogen where at least the hydrogen is fed to a fuel cell.

It will be obvious to the skilled in the art how to build systems and devices according to the present invention from units, components and/or assemblies known per se considering the specific system or device and the con-templated use.

## Claims

1. A method of releasing ammonia from an ammonia- containing solid material capable of storing and releasing ammonia by absorption/desorption, said method comprising the steps of: (a) providing a container; (b) placing the ammonia-containing solid material in said container; (c) effecting controlled ammonia release by dosing water into the container in a controlled manner,
wherein the ammonia-containing material is a metal ammine complex in the form of an ionic salt of the general formula: Mₐ(NH₃)ₙX_{z}, wherein M is one or more cations selected from alkali metals such as Li, Na, K or Cs, alkaline earth metals such as Mg, Ca or Sr, and/or transition metals such as V, Cr, Mn, Fe, Co, Ni, Cu, or Zn or combinations thereof such as NaAl, KAl, K₂Zn, CsCu, or K₂Fe, X is one or more anions selected from fluoride, chloride, bromide, iodide, nitrate, thiocyanate, sulphate, molybdate, and phosphate ions, a is the number of cations per salt molecule, z is the number of anions per salt molecule, and n is the coordination number of 2 to 12.

2. A method according to claim 1 , wherein the ammonia containing material initially is saturated with ammonia.

3. A method according to claims 1-2, wherein the water needed for ammonia release is provided from a separate water container.

4. A method according to claims 1-3, wherein the water needed for effecting ammonia release is provided as a product of a chemical reaction, a combustion reaction, from the humid exhaust of a fuel cell unit or from the humid exhaust gas of an automotive unit operating on gasoline, diesel or other hydro-carbon fuels such as ethanol or on synthetic fuel such as ammonia or hydrogen.

5. A method according to claims 1-4, wherein the water needed for effecting ammonia release is provided by spraying or atomizing water as fine droplets into the storage container.

6. A method according to claims 1-5, wherein the water needed for ammonia release is provided by passing a humid gas through the storage container thereby replacing some or all of the water content in the gas by ammonia released from the solid.

7. A method according to any of claims 1-6, wherein the ionic salt is either chloride or sulphate salts of Mg, Ca, Sr or mixtures thereof.

8. A method according to any of claims 1-7, wherein the saturated ammonia containing material is compacted to a dense block, rod, cylinder, ring or edged unit such as cube with a density above 70% of the theoretical maximum skeleton density of the saturated solid material before placing in the container.

9. A method according to any of claims 1-8, wherein the release rate of ammonia is determined by control of the dosing rate of water into the storage container.

10. A method according to any of claims 1-9, wherein the released ammonia is used in selective catalytic reduction of NOₓ in exhaust gases from combustion processes, in particular in NOₓ emission reduction from stationary and mobile combustion engines fuelled by diesel, petrol, natural gas or any other fossil fuels or by methanol, ethanol, hydrogen, methane, ethane or any other bio- or synthetic fuel such as ammonia and hydrogen, or in NOₓ emission reduction from stationary or mobile power plants fuelled by coal, natural gas, oil or any other fossil fuels.

11. A method as claimed in any of claims 1-9, wherein the released ammonia is fed to an ammonia-fuelled fuel cell as fuel or to an ammonia decomposition reactor wherein ammonia is decomposed to nitrogen and hydrogen, and at least the hydrogen is fed to a hydrogen-fuelled fuel cell as fuel.

12. A method according to claim 10 or 11, wherein the delivery of ammonia to the uses thereof is further controlled by reduction valves, flow controllers, valves or similar type of equipment.

13. A device for releasing ammonia for use in a selective catalytic reduction of NOₓ in an oxygen-containing exhaust gas of a combustion engine or combustion process according to the method of claim 10, said device comprising: (a) a container with a solid material capable of storing/delivering ammonia by absorption/desorption inside said container; (b) means for controlled dosing of water into the container thereby effecting ammonia release, (c) means for introducing the released gaseous ammonia from the container into an exhaust gas, (d) a catalyst for reducing NOₓ by reaction with the dosed ammonia, and (e) means for controlling the amount of ammonia introduced into the exhaust line, depending on the operating conditions of the engine.

14. A device according to claim 13 wherein the combustion engine or the combustion process is located in automobiles, trucks, trains, ships or any other motorized machine or in power plants generating electricity.

## Patentansprüche

1. Verfahren zur Freisetzung von Ammoniak aus einem ammoniakhaltigen festen Material, das Ammoniak durch Absorption/Desorption speichern und freisetzen kann, wobei das Verfahren die Schritte umfasst: a) Bereitstellen eines Behälters; b) Anordnen des ammoniakhaltigen festen Materials in dem Behälter; c) Bewirken von kontrollierter Ammoniakfreisetzung durch gesteuertes Eindosieren von Wasser in den Behälter,
wobei das ammoniakhaltige Material ein Metall-Ammin-Komplex in Form eines ionischen Salzes der allgemein Formel: Mₐ(NH₃)ₙX_{z} ist, in der M für ein oder mehrere Kationen steht, die aus Alkalimetallen, wie Li, Na, K oder Cs, Erdalkalimetallen, wie Mg, Ca oder Sr, und/oder Übergangsmetallen, wie V, Cr, Mn, Fe, Co, Ni, Cu oder Zn oder Kombinationen derselben, wie NaAl, KAl, K₂Zn, CsCu oder K₂Fe, ausgewählt ist, X für ein oder mehrere Anionen steht, die aus Fluorid-, Chlorid-, Bromid-, Iodid-, Nitrat-, Thiocyanat-, Sulfat-, Molybdat- und Phosphat-Ionen ausgewählt sind, a die Zahl der Kationen pro Salzmolekül ist, z die Zahl der Anionen pro Salzmolekül ist, und n die Koordinationszahl von 2 bis 12 ist.

2. Verfahren nach Anspruch 1, bei dem das ammoniakhaltige Material anfänglich mit Ammoniak gesättigt ist.

3. Verfahren nach den Ansprüchen 1 - 2, bei dem das Wasser, das für die Ammoniakfreisetzung benötigt wird, aus einem getrennten Wasserbehälter bereitgestellt wird.

4. Verfahren nach den Ansprüchen 1 - 3, bei dem das Wasser, das für die Bewirkung der Ammoniakfreisetzung benötigt wird, als Produkt einer chemischen Reaktion, einer Verbrennungsreaktion, aus dem feuchten Abgas einer Brennstoffzellen-Einheit oder aus dem feuchten Abgas einer Automobil-Einheit, die mit Benzin, Diesel oder anderen Kohlenwasserstoff-Brennstoffen, wie Ethanol, oder mit synthetischem Brennstoff, wie Ammoniak oder Wasserstoff, betrieben wird, bereitgestellt wird.

5. Verfahren nach den Ansprüchen 1 - 4, bei dem das Wasser, das für die Bewirkung der Ammoniakfreisetzung benötigt wird, durch Einsprühen oder Zerstäuben von Wasser als feine Tröpfchen in den Speicherbehälter bereitgestellt wird.

6. Verfahren nach den Ansprüchen 1 - 5, bei dem das Wasser, das für die Ammoniakfreisetzung benötigt wird, mittels Durchleiten eines feuchten Gases durch den Speicherbehälter bereitgestellt wird, wodurch etwas oder alles des Wassergehalts in dem Gas durch Ammoniak ersetzt wird, das aus dem Festkörper freigesetzt wird.

7. Verfahren nach irgendeinem der Ansprüche 1 - 6, bei dem es sich bei dem ionischen Salz entweder um Chlorid- oder um Sulfatsalze von Mg, Ca, Sr oder deren Mischungen handelt.

8. Verfahren nach irgendeinem der Ansprüche 1 - 7, bei dem das gesättigte ammoniakhaltige Material zu einem dichten Block, Stab, Zylinder, Ring oder einer Einheit mit Kanten, wie einem Würfel, mit einer Dichte oberhalb von 70 % der theoretischen maximalen Gerüstdichte des gesättigten festen Materials kompaktiert wird, bevor es in den Behälter gegeben wird.

9. Verfahren nach irgendeinem der Ansprüche 1 - 8, bei dem die Freisetzungsgeschwindigkeit des Ammoniaks durch die Steuerung der Eindosierungsgeschwindigkeit von Wasser in den Speicherbehälter festgelegt wird.

10. Verfahren nach irgendeinem der Ansprüche 1 - 9, bei dem das freigesetzte Ammoniak bei der selektiven katalytischen Reduktion von NOₓ in Abgasen aus Verbrennungsprozessen, insbesondere bei der NOₓ-Emissions-verringerung aus stationären oder beweglichen Verbrennungsmaschinen, die mit Diesel, Erdöl, Naturgas oder irgendwelchen anderen fossilen Brennstoffen oder durch Methanol, Ethanol, Wasserstoff, Methan, Ethan oder irgendeinem anderen Bio- oder synthetischen Brennstoff, wie Ammoniak und Wasserstoff, als Brennstoff betrieben werden, oder bei der Verringerung von NOₓ-Emission aus stationären oder beweglichen Kraftwerken, die mit Kohle, Naturgas, Öl oder irgendwelchen anderen fossilen Brennstoffen als Brennstoff betrieben werden, verwendet wird.

11. Verfahren nach irgendeinem der Ansprüche 1 - 9, bei dem das freigesetzte Ammoniak in eine mit Ammoniak betriebene Brennstoffzelle als Brennstoff oder in einen Ammoniak-Zersetzungsreaktor eingespeist wird, in dem Ammoniak zu Stickstoff und Wasserstoff zersetzt wird und mindestens der Wasserstoff in eine mit Wasserstoff betriebene Brennstoffzelle als Brennstoff eingespeist wird.

12. Verfahren nach Anspruch 10 oder 11, bei dem die Zufuhr von Ammoniak zu den Verwendungen desselben weiter durch Drosselventile, Durchflussregler, Ventile oder eine Einrichtung ähnlicher Art gesteuert wird.

13. Vorrichtung zur Freisetzung von Ammoniak zur Verwendung bei der selektiven katalytischen Reduktion von NOₓ in einem sauerstoffhaltigen Abgas einer Verbrennungsmaschine oder eines Verbrennungsverfahrens nach dem Verfahren von Anspruch 10, wobei die Vorrichtung umfasst: (a) einen Behälter mit einem festen Material, das Ammoniak durch Absorption/Desorption speichern/zuführen kann, in dem Behälter; (b) Mittel zur gesteuerten Eindosierung von Wasser in den Behälter, wodurch eine Ammoniakfreisetzung bewirkt wird; (c) Mittel zur Einführung des freigesetzten gasförmigen Ammoniaks aus dem Behälter in ein Abgas, (d) einen Katalysator zur Reduktion von NOₓ durch Reaktion mit dem zudosierten Ammoniak, und (e) Mittel zur Steuerung der Ammoniakmenge, die in die Abgasleitung eingeführt wird, in Abhängigkeit von den Betriebszuständen der Maschine.

14. Vorrichtung nach Anspruch 13, bei der die Verbrennungsmaschine oder der Verbrennungsprozess in Automobilen, Lastwagen, Zügen, Schiffen oder irgendeiner anderen motorisierten Maschine oder in Kraftwerken, die Elektrizität erzeugen, angeordnet ist.

## Revendications

1. Procédé de libération d'ammoniac d'un matériau solide contenant de l'ammoniac capable de stocker et de libérer de l'ammoniac par absorption/désorption, ledit procédé comprenant les étapes consistant à : (a) fournir un récipient ; (b) placer le matériau solide contenant de l'ammoniac dans ledit récipient ; (c) réaliser une libération contrôlée de l'ammoniac par dosage d'eau dans le récipient d'une manière contrôlée, dans lequel le matériau contenant de l'ammoniac est un complexe amine-métal sous la forme d'un sel ionique ayant la formule générale : Mₐ(NH₃)ₙX_{Z}, dans laquelle M est un ou plusieurs cations choisis parmi les métaux alcalins tels que Li, Na, K ou Cs, les métaux alcalino-terreux tels que Mg, Ca ou Sr, et/ou les métaux de transition tels que V, Cr, Mn, Fe, Co, Ni, Cu ou Zn ou des combinaisons de ceux-ci telles que NaAl, KAl, K₂Zn, CsCu ou K₂Fe, X est un ou plusieurs anions choisis parmi les ions fluorure, chlorure, bromure, iodure, nitrate, thiocyanate, sulfate, molybdate et phosphate, a est le nombre de cations par molécule de sel, z et le nombre d'anions par molécule de sel, et n est le nombre de coordination de 2 à 12.

2. Procédé selon la revendication 1, dans lequel le matériau contenant de l'ammoniac est initialement saturé avec de l'ammoniac.

3. Procédé selon la revendication 1 à 2, dans lequel l'eau nécessaire pour la libération de l'ammoniac provient d'un récipient d'eau séparé.

4. Procédé selon les revendications 1 à 3, dans lequel l'eau nécessaire pour réaliser la libération de l'ammoniac est fournie sous forme d'un produit d'une réaction chimique, d'une réaction de combustion, provenant du dégagement humide d'une unité de pile à combustible ou provenant du dégagement gazeux humide d'une unité automobile fonctionnant avec de l'essence, du gazole ou d'autres carburants hydrocarbonés tels que l'éthanol ou avec un carburant synthétique tel que de l'ammoniac ou de l'hydrogène.

5. Procédé selon les revendications 1 à 4, dans lequel l'eau nécessaire pour réaliser la libération de l'ammoniac est fournie par pulvérisation ou atomisation d'eau sous forme de fines gouttelettes dans le récipient de stockage.

6. Procédé selon les revendications 1 à 5, dans lequel l'eau nécessaire pour la libération de l'ammoniac est fournie par passage d'un gaz humide à travers le récipient de stockage, remplaçant ainsi une partie ou toute l'eau contenue dans le gaz par l'ammoniac libéré du solide.

7. Procédé selon l'une quelconque des revendications 1 à 6, dans lequel le sel ionique est un sel de chlorure ou de sulfate de Mg, Ca, Sr ou des mélanges de ceux-ci.

8. Procédé selon l'une quelconque des revendications 1 à 7, dans lequel le matériau saturé en ammoniac est compacté en un bloc dense, une baguette, un cylindre, un anneau ou un élément à bord, tel qu'un cube, avec une densité supérieure à 70 % de la densité maximale théorique du squelette du matériau solide saturé avant d'être placé dans récipient.

9. Procédé selon l'une quelconque des revendications 1 à 8, dans lequel le taux de libération de l'ammoniac est déterminé par contrôle du taux de dosage de l'eau dans le récipient de stockage.

10. Procédé selon l'une quelconque des revendications 1 à 9, dans lequel l'ammoniac libéré est utilisé dans la réduction catalytique sélective du NOₓ dans des gaz échappement provenant de procédés de combustion, en particulier dans la réduction d'émission de NOₓ provenant de moteurs à combustion stationnaires ou mobiles alimentés avec du gazole, de l'essence, un gaz naturel ou d'autres carburants fossiles ou avec du méthanol, de l'éthanol, de l'hydrogène, du méthane, de l'éthane ou n'importe quels autres carburants naturels ou synthétiques tels que l'ammoniac et l'hydrogène, ou dans la réduction d'émission de NOₓ provenant d'installations électriques stationnaires ou mobiles alimentées avec du charbon, un gaz naturel, de l'huile ou n'importe quels autres carburants fossiles.

11. Procédé selon l'une quelconque des revendications 1 à 9, dans lequel l'ammoniac libéré est passé dans une pile à combustible alimentée avec de l'ammoniac comme carburant ou dans un réacteur de décomposition d'ammoniac dans lequel l'ammoniac est décomposé en azote et en hydrogène, et au moins l'hydrogène est passé dans une pile à combustible alimentée avec de l'hydrogène comme carburant.

12. Procédé selon la revendication 10 ou 11, dans lequel le passage de l'ammoniac auxdites fins d'utilisation est en outre contrôlée par des soupapes de réduction, des contrôleurs de débit, des vannes ou un type d'équipement similaire.

13. Dispositif de libération d'ammoniac pour son utilisation dans une réduction catalytique sélective de NOₓ dans un gaz d'échappement contenant de l'oxygène d'un moteur à combustion ou d'un procédé de combustion selon la revendication 10, ledit dispositif comprenant : (a) un récipient avec un matériau solide susceptible de stocker/libérer l'ammoniac par absorption/ désorption dans ledit récipient ; (b) des moyens de dosage contrôlé de l'eau dans le récipient, permettant de réaliser la libération d'ammoniac ; (c) des moyens d'introduction de l'ammoniac gazeux libéré provenant du récipient dans un gaz d'échappement ; (d) un catalyseur pour réduire le NOₓ par réaction avec l'ammoniac dosé ; et (e) des moyens de contrôle de la quantité d'ammoniac introduite dans la ligne d'échappement, en fonction des conditions de fonctionnement du moteur.

14. Procédé selon la revendication 13, dans lequel le moteur à combustion ou le procédé de combustion est situé dans des automobiles, des camions, des trains, des bateaux ou n'importe quelle autre machine motorisée ou dans des installations électriques générant de l'électricité.
